## Europäisches Patentamt
## European Patent Office
## Office européen des brevets

(19)

(11) Veröffentlichungsnummer: **0 122 331**
**B1**

(12) **EUROPÄISCHE PATENTSCHRIFT**

(45) Veröffentlichungstag der Patentschrift:
14.12.88

(51) Int. Cl.⁴: **H 04 M 1/65**

(21) Anmeldenummer: 83112330.2

(22) Anmeldetag: 08.12.83

(54) **Automatischer Anrufbeantworter.**

(30) Priorität: 13.04.83 DE 3313306

(43) Veröffentlichungstag der Anmeldung:
24.10.84 Patentblatt 84/43

(45) Bekanntmachung des Hinweises auf die Patenterteilung:
14.12.88 Patentblatt 88/50

(84) Benannte Vertragsstaaten:
DE FR GB IT

(56) Entgegenhaltungen:
BE-A-509 912
GB-A-719 981

(73) Patentinhaber: GRUNDIG E.M.V. Elektro-Mechanische Versuchsanstalt Max Grundig holländ. Stiftung & Co. KG., Kurgartenstrasse 37, D-8510 Fürth/Bay. (DE)

(72) Erfinder: Mittelstädt, Rainer, Sinnbronner Strasse 100, D-8500 Nürnberg (DE)

(74) Vertreter: Kolb, Max, Kurgartenstrasse 37, D-8510 Fuerth/Bayern (DE)

EP 0 122 331 B1

## Beschreibung

Die Erfindung betrifft einen automatischen Anrufbeantworter der im Oberbegriff des Anspruchs 1 angegebenen Art.

Nach den Bestimmungen der Post ("Bedingungen für private Zusatzeinrichtungen" 18 R 2, April 1974, FTZ, Referat A 53 - 10) soll ein über einen Telefon-Anrufbeantworter abgegebener Ansagetext nach Möglichkeit aus einem Melde- und Mitteilungstext (erster Teil der Ansage) und einem Schlußansagetext (zweiter Teil der Ansage) bestehen. Für die Textteile sind genaue Vorschriften bezüglich ihrer zeitlichen Dauer zu beachten. Beide sind so zu gestalten daß sie zum einen jeweils eine bestimmte Mindestdauer aufweisen und zum anderen aber auch eine vorgegebene Höchtdauer nicht überschreiten.

Es ist eine Anzeigevorrichtung für einen Anrufbeantworter bekannt, die mehrere in einer Reihe angeordnete Anzeigeelemente enthält, welche mittels einer Sichtanzeigesteuerung nacheinander proportional zum Belegungsgrad des Ansagetext-Speichers gezündet werden (DE-PS-2 854 431). Damit soll es dem Benutzer möglich sein, die postseitigen Bestimmungen über die Sprechdauer einer Ansage einzuhalten.

Der Nachteil dieser Anzeige besteht darin, daß es zumindest einem ungeübten Anwender nicht möglich ist, sich einerseits auf das nach und nach entstehende und den Belegungsgrad des Speichers anzeigende Leuchtband und andererseits gleichzeitig auf seinen zu sprechenden Ansagetext zu konzentrieren. Darüber hinaus ist eine derartige Sichtanzeige mit einem relativ hohen Kostenaufwand verbunden.

Aufgabe der Erfindung ist es daher, für einen Anrufbeantworter der eingangs genannten Art eine einfache und kostengünstige Sichtanzeige mit nur zwei Anzeigeelementen vorzusehen, mit der gemäß den postseitigen Vorschriften eine Kontrolle der zeitlichen Mindest- und Höchstdauer des eigentlichen Ansagetextes und der Schlußansage möglich ist.

Diese Aufgabe wird durch die im kennzeichnenden Teil des Anspruchs 1 enthaltenen Merkmale gelöst. Vorteilhafte Weiterbildungen der Erfindung sind in den Unteransprüchen gekennzeichnet.

Es ist zwar eine Anzeigevorrichtung mit zwei Leuchtelementen bekannt, die beim Einspeichern eines Ansagetextes zur Kontrolle einer vorgeschriebenen (maximalen) Sprechdauer dient (DE-OS-2 633 882). Sie ermöglicht jedoch dem Benutzer keine Kontrolle über die Mindest- bzw. Höchstsprechdauer der Schlußansage.

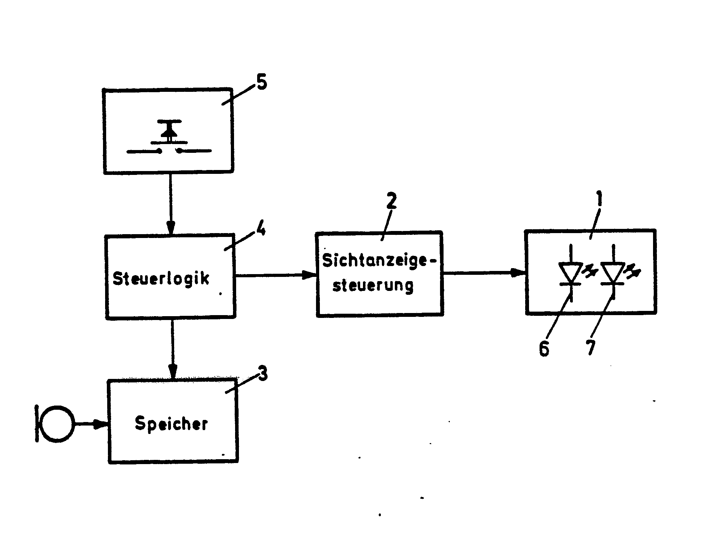

Die Figur zeigt ein Blockschaltbild, das die wichtigsten Funktionsblöcke für die Ansteuerung einer Sichtanzeige in einem Anrufbeantworter gemäß der Erfindung enthält.

In der dargestellten Schaltungsanordnung steht eine Steuerlogik 4 in Verbindung mit einem Ansagetext-Speicher 3, einer Aufnahmetaste 5 und einer Sichtanzeigesteuerung 2, an welche die Sichtanzeige 1, bestehend aus den Anzeigeelementen 6 und 7, angeschlossen ist.

Bei einer derartigen Anordnung braucht der Anwender während des Sprechens oder Anhörens des Ansagetextes nur noch zwei Anzeigeelemente zu beobachten und kann sich damit voll auf seinen Text konzentrieren. Nach dem Drücken der Aufnahmetaste 5 wartet er zunächst das Aufleuchten des ersten Anzeigeelementes 6 ab. Sobald dies geschehen ist, kann er mit dem Aufsprechen des Textes beginnen. Die Sichtanzeigesteuerung 2 hält dieses Anzeigeelement nun solange im gezündeten Zustand, bis die Mindestsprechdauer für den Ansagetext (Melde- und Mitteilungstext) abgelaufen ist. Danach wird das zweite Anzeigeelement 7 mittels der Sichtanzeigesteuerung 2 gezündet und behält bis zum Ende der vorgeschriebenen Maximalsprechdauer diesen Zustand bei. Der Anwender muß also seine Textlänge so gestalten, daß nach Beendigung der Ansage das zweite Anzeigeelement 7 leuchtet. Der Ansagetext ist zeitlich zu kurz, wenn das erste Anzeigeelement noch gezündet ist, und zeitlich zu lang, falls keines der beiden Anzeigeelemente mehr leuchtet. Wie lange sich jedes Element im gezündeten Zustand befindet, ist einer zur Sichtanzeige gehörenden Beschriftung zu entnehmen. Wird der Aufzeichnungsvorgang für den ersten Teil der Ansage durch Loslassen der Taste 5 unterbrochen, stoppt die Steuerlogik 4 die Aufzeichnungseinrichtung an dieser Stelle. Die Sichtanzeigesteuerung 2 schaltet in dieser Zeit zwischen beiden Anzeigeelementen 6 und 7 ständig hin und her, so daß diese wechselseitig aufblinken. Damit wird die Wartestellung des Anrufbeantworters für das Aufsprechen der Schlußansage (zweiter Teil der Ansage) angezeigt. In dieser Wartestellung bleibt er jedoch nur für einen begrenzten Zeitraum, in dem die Schlußansage erfolgen muß Geschieht dies nicht, dann geht der Anrufbeantworter, gesteuert durch die Steuerlogik 4, wieder in seine Ausgangsposition zurück. Wird aber innerhalb dieses Zeitraumes die Aufnahmetaste 5 erneut betätigt, so erhält die Sichtanzeigesteuerung 2 von der Steuerlogik 4 einen Umschaltbefehl, welcher bewirkt, daß die Zündung der Anzeigeelemente 6 und 7 in geänderten Zeitphasen erfolgt. Diese Zeitphasen in denen entweder das erste Anzeigeelement 6 oder das zweite Anzeigeelement 7 angesteuert und gezündet wird, entsprechen den Mindest- und Höchstsprechzeiten für die Schlußansage. Somit kann der Benutzer auch mit Hilfe einer derartigen einfachen Sichtanzeige die postseitigen Vorschriften über die zeitliche Länge eines zweiteiligen Ansagetextes exakt einhalten.

Die Anzeigeelemente sind in vorteilhafter Weise als Leuchtdioden oder Flüssigkeitskristallanzeigen ausgebildet.

Als Ansagetext-Speicher können, wie an sich bekannt, Band- und/oder Festkörperspeicher verwendet werden.

**Patentansprüche**

1. Automatischer Anrufbeantworter mit einem oder mehreren Ansagetextspeichern, ferner mit einer aus zwei Anzeigeelementen bestehenden Sichtanzeige, die beim Einspeichern oder Abhören eines zweiteiligen Ansagetextes zur Kontrolle der vorgeschriebenen Sprechzeiten dient, dadurch gekennzeichnet, daß eine Sichtanzeigesteuerung (2) vorgesehen ist, die das erste Anzeigeelement (6) zündet, sobald über eine Bedientaste (5) eine Steuerlogik (4) den Anrufbeantworter in den aufnahme- bzw. abhörbereiten Zustand gebracht hat, daß die Sichtanzeigesteuerung dieses Anzeigeelement solange im gezündeten Zustand hält, bis der erste Teil des Ansagetextes eine Mindestdauer erreicht hat, und daß die Sichtanzeigesteuerung bei Erreichen dieses Zeitpunktes das zweite Anzeigeelement (7) zündet, welches gezündet bleibt, bis die maximale noch zur verfügung stehende Restdauer des ersten Teils des Ansagetextes verstrichen ist, daß ferner die Sichtanzeigesteuerung (2) nach Beendigung des ersten Teils der Ansage und Betätigung der Bedientaste (5) die Anzeigeelemente (6, 7) wechselweise zündet, um die Bereitschaft des Gerätes zur Aufnahme des zweiten Teils der Ansage anzuzeigen, und daß mit dem Beginn des zweiten Teils der Ansage nach erneuter Betätigung der Bedientaste (5) die Sichtanzeigesteuerung (2) von der Steuerlogik (4) einen Umschaltbefehl erhält, der bewirkt, daß die Zündung der Anzeigeelemente (6, 7) zur Kontrolle der Mindest- und Höchstdauer des zweiten Teils der Ansage mit Zeitphasen erfolgt, die gegenüber den Zeitphasen für die Kontrolle des ersten Teils der Ansage geändert sind.

2. Automatischer Anrufbeantworter nach Anspruch 1, dadurch gekennzeichnet, daß bei den Anzeigeelementen Markierungen oder Beschriftungen angebracht sind, aus denen in Verbindung mit den Zündphasen der Anzeigeelemente (6, 7) die jeweiligen Mindest- und Höchstzeiten der beiden Ansagetextteile ersichtlich sind.

3. Automatischer Anrufbeantworter nach Anspruch 1 oder 2, dadurch gekennzeichnet, daß bei überschreitung einer bestimmten Pause zwischen den beiden Ansagetextteilen der Anrufbeantworter gesteuert durch die Steuerlogik (4) wieder in seine Ausgangsposition zurückgeht.

4. Automatischer Anrufbeantworter nach einem oder mehreren der Ansprüche 1 bis 3, dadurch gekennzeichnet, daß die Anzeigeelemente als Leuchtdioden oder Flüssigkeitskristallanzeigen ausgebildet sind.

5. Automatischer Anrufbeantworter nach einem oder mehreren der Ansprüche 1 bis 4, dadurch gekennzeichnet, daß der oder die Ansagetext-Speicher als Band- und/oder Festkörperspeicher ausgebildet sind.

**Claims**

1. Automatic answering machine having one or more announcement text memories, furthermore having a viewing display consisting of two display elements, which is used for checking the prescribed speaking times during the storage or monitoring of a two-part announcement text, characterized in that a vieving display control (2) is provided which triggers the first display element (6) as soon as a control logic (4) has brought the answering machine into the state ready for recording or monitoring via an operating key (5), that the vieving display control keeps this display element in the triggered state until the first part of the announcement text has reached a minimum duration and that, when this time is reached, the viewing display control triggers the second display element (7) which remains triggered until the maximum remaining duration of the first part of the announcement test still available has elapsed, that, furthermore, the viewing display control (2), after the first part of the announcement has ended and the operating key (5) has been activated, alternately triggers the display elements (6, 7) to indicate the readiness of the device for recording the second part of the announcement, and that, with the beginning of the second part of the announcement, after repeated activation of the operating key (5), the viewing display control (2) receives from the control logic (4) a switch-over command which has the effect that the triggering of the display elements (6, 7) for checking the minimum and maximum duration of the second part of the announcement occurs with time phases which are changed compared with the time phases for checking the first part of the announcement.

2. Automatic answering machine according to Claim 1, characterized in that markings or labellings are attached at the display elements from which the respective minimum and maximum times of the two announcement text parts can be seen in conjunction with the triggering phases of the display elements (6, 7).

3. Automatic answering machine according to Claim 1 or 2, characterized in that, when a certain pause between the two announcement text parts is exceeded, the answering machine returns to its initial position under control of the control logic (4).

4. Automatic answering machine according to one or more of Claims 1 to 3, characterized in that the display elements are constructed as light-emitting diodes or liquid crystal displays.

5. Automatic answering machine according to one or more of Claims 1 to 4, characterized in that the announcement text memory or memories are constructed as tape and/or solid-state memories.

**Revendications**

1. Répondeur téléphonique automatique comprenant une ou plusieurs mémoires de textes de messages, un indicateur visuel composé de deux éléments indicateurs qui sert à contrôler les durées de parole prescrites lorsqu'on enregistre ou écoute un texte de message en deux parties, caractérisé en ce qu'il comprend une commande d'indication visuelle (2) qui allume le premier élément indicateur (6) dès qu'une logique de commande (4), actionnée par une touche de manoeuvre (5) a mis le répondeur dans l'état prêt à l'enregistrement ou à l'écoute, en ce que la commande de l'indication visuelle de cet élément indicateur se maintient dans l'état allumé jusqu'au moment où la première partie du texte du message a atteint une durée minimale, et en ce que la commande d'indication visuelle allume le deuxième élément indicateur (7) lorsqu'on atteint cet instant, cet élément restant allumé jusqu'à ce que la durée résiduelle maximale de la première partie du texte du message qui est encore disponible se soit écoulée, en ce que, en outre, la commande d'indication visuelle (2) allume alternativement les éléments indicateurs (6, 7) après l'achèvement de la première partie du message et après l'actionnement de la touche de manoeuvre (5) pour indiquer que l'appareil est prêt à enregistrer la deuxième partie du message, et en ce que, avec le début de la deuxième partie du message, après nouvel actionnement de la touche de manoeuvre (5), la commande d'indication visuelle (2) reçoit de la logique de commande (4) un ordre de commutation qui a pour effet que l'allumage des éléments indicateurs (6, 7) se produit, pour la commande de la durée minimale et de la durée maximale de la deuxième partie du message, avec des phases temporelles qui sont modifiées comparativement aux phases temporelles prévues pour la commande de la première partie du message.

2. Répondeur automatique selon la revendication 1, caractérisé en ce qu'aux éléments indicateurs sont associés des marques ou inscriptions à l'aide desquels on peut voir en combinaison avec les phases d'allumage des éléments indicateurs (6, 7), les durées minimale et maximale des deux parties du texte du message.

3. Répondeur téléphonique automatique selon la revendication 1 ou la revendication 2, caractérisé en ce que, si l'on dépasse une durée de pause déterminée entre les deux parties du texte du message, le répondeur téléphonique est replacé à sa position initiale sous la commande de la logique de commande (4).

4. Répondeur téléphonique automatique selon une ou plusieurs des revendications 1 à 3, caractérisé en ce que les éléments indicateurs sont constitués par des diodes électroluminescentes ou par des indicateurs à cristaux liquides.

5. Répondeur téléphonique automatique selon une ou plusieurs des revendications 1 à 4, caractérisé en ce que la ou les mémoires de texte de message est ou sont constituées par une mémoire à bande et/ou une mémoire à circuit intégré.